# EUROPÄISCHE PATENTSCHRIFT

(11) **EP 0 381 982 B1**
(45) Veröffentlichungstag und Bekanntmachung des Hinweises auf die Patenterteilung: **30.03.1994**
(21) Anmeldenummer: 90101191.6
(22) Anmeldetag: 22.01.1990
(51) Int. Cl.: B27L 5/02, G01V 3/00

(54) **Verfahren und Schälmaschine zum Schälen eines Holzstammes**
Method and peeling machine for peeling a log
Procédé et dérouleuse pour dérouler des bois en grume

(30) Priorität: 07.02.1989 DE 3903561
(43) Veröffentlichungstag der Anmeldung: 16.08.1990
(73) Patentinhaber: Institut Dr. Friedrich Förster Prüfgerätebau GmbH & Co. KG, 72766 Reutlingen (DE)
(72) Erfinder: Werz, Helmut, D-7411 St. Johann-Würtingen (DE); Trinkaus, Hans-Peter, D-7410 Reutlingen (DE)
(74) Vertreter: Patentanwälte Ruff, Beier, Schöndorf und Mütschele

(56) Entgegenhaltungen:
- DE-A- 2 405 359
- DE-A- 3 207 747
- DE-C- 522 701
- DE-C- 3 511 355
- US-A- 3 702 626
- US-A- 4 619 299

## Beschreibung

Die Erfindung betrifft ein Verfahren zum Schälen eines Holzstammes gemäß dem Oberbegriff von Patentanspruch 1. Die Erfindung betrifft ferner eine Schälmaschine zum Durchführen des Verfahrens. Verfahren und Schälmaschine werden eingesetzt bei der Herstellung des Vormaterials für Sperr- und Furnierhölzer.

Ein altes und kostenträchtiges Problem beim Schälen von Holzstämmen ist das häufige Auftreten von metallischen Einschlüssen im Inneren des zu verarbeitenden Stammholzes. Das Vorhandensein solcher Metallteile läßt sich auf verschiedene Ursachen zurückführen. In ehemaligen Kampfgebieten sind es Splitter von Bomben oder Granaten, aber auch kleinere Geschosse, die vielfach einen hohen Grad der Verunreinigung mit Metallteilen bewirkt haben. Doch auch bei Stammholz aus Gebieten in denen keine Kampfhandlungen stattgefunden haben, sind Metallteile keine Seltenheit. Hier handelt es sich häufig um Reste von Schutzzäunen oder zu deren Befestigung benutzte Nägel, die im Laufe der Zeit ins Holz "hineingewachsen" sind. Bei exotischen Hölzern können abgebrochene Stücke von beim Transport benutzten Klammern im Holz zurückgeblieben sein.

In jedem Falle führt ein Metallteil im Stammholz zu einer je nach Größe des Teiles mehr oder weniger schwerwiegenden Beschädigung des Schälwerkzeuges. Eine solche hat jedoch augenblicklich Fehler am Schälprodukt zur Folge, die dieses unbrauchbar oder nur noch für geringwertige Einsatzfälle verwendbar machen. Man muß daher das beschädigte Schälwerkzeug ausbauen und durch ein anderes ersetzen. Das bedeutet indessen wegen der notwendigen genauen Justage des Schälwerkzeuges einen längeren Stillstand der Schälmaschine und einen entsprechend langen, äußerst unerwünschten Produktionsausfall.

Um die genannten Nachteile zu umgehen, ist man seit langem bemüht, zunächst die Stämme auf das Auftreten von Metallteilen zu untersuchen, mit dem Ziele, eventuell ermittelte Metallteile vor dem Schälen zu entfernen. Dazu boten sich bekannte Metallsuchgeräte mit Durchlaufspule an, wie sie auch zum Untersuchen von auf Transportbändern beförderten Gütern benutzt werden. Solche Suchgeräte werden jedoch der gestellten Aufgabe nicht gerecht. Zum einen reicht die Empfindlichkeit nicht aus, um tiefer liegende kleine Metallteile anzuzeigen. Zum anderen erhält man keine ausreichende Information über die Lage eines ermittelten Metallteiles. Es wird lediglich der Querschnitt ermittelt, in dem sich das gesuchte Teil befindet, nicht jedoch die Lage des Teiles innerhalb dieses Querschnittes. Ein weiterer Nachteil ist noch, daß die beschriebene Maßnahme einen zusätzlichen Arbeitsgang darstellt, bei dem fortlaufend beträchtliche Kosten entstehen. Das Letztere gilt in verstärktem Maße, wenn man versucht, vor Beginn der Schälarbeit, die Oberfläche des Holzstammes mit einer Tastsuchsonde auf Metallteile abzusuchen. Hier kommt noch hinzu, daß das Ergebnis der Suche sehr stark von der Lage eventueller Metallteile abhängt. Oberflächenferne Metallteile sind bei entsprechend dicken Holzstämmen kaum noch auffindbar mit einer Tastsuchsonde.

Der Erfindung liegt demgegenüber die Aufgabe zugrunde, ein Verfahren und eine Schälmaschine der eingangs genannten Art zu schaffen, bei denen das Auffinden von Metallteilen ohne die genannten Nachteile in einfacher Weise möglich wird.

Diese Aufgabe wird gelöst durch ein Verfahren, das gemäß Anspruch 1 und durch eine Schälmaschine, die gemäß Anspruch 2 gekennzeichnet ist.

Die erfindungsgemäße Lösung ermöglicht im Zuge des Schälvorganges ein rechtzeitiges Auffinden von Metallteilen, so daß eine Beschädigung des Schälwerkzeuges und dessen Auswechseln in jedem Fall vermieden werden können. Ein zusätzlicher Arbeitsgang wird nicht erforderlich, da das Aufsuchen der Metallteile im Zuge des Schälvorganges erfolgt. Von großem Vorteil ist auch, daß es möglich wird, die Suche nach Metallteilen mit gleichbleibender Empfindlichkeit durchzuführen, da es leicht ist, den Abstand der Suchsonde von der Oberflächenschicht konstant zu halten, die gerade im Eingriff mit dem Schälwerkzeug steht. In weiterer Ausgestaltung der Erfindung sind in den Unteransprüchen verschiedene Möglichkeiten zum Aufrechterhalten des konstanten Abstandes der Suchsonde angegeben. Eine andere Ausgestaltung der Erfindung besteht darin, daß die Suchsonde von langgestreckter Form ist, deren Längsausdehnung derjenigen des Schälwerkzeuges etwa entspricht. In Ausgestaltung der Erfindung wird auch vorgeschlagen, daß das elektrische Signal aus der Suchsonde dazu benutzt wird, das Schälwerkzeug aus dem Eingriff mit der Oberfläche des Holzstammes zu nehmen beziehungsweise eine optische und/oder akustische Meldeeinrichtung zu betätigen. Es wird ferner noch vorgeschlagen, daß zusätzlich ein Winkelsektorgeber zum Aufnehmen der Rotationsbewegung des Holzstammes vorgesehen wird und ein elektronischer Schaltkreis, der erst bei der n-ten Wiederholung eines elektrischen Signales in ein und demselben Winkelsektor das Abheben des Schälwerkzeuges und das Betätigen der Meldeeinrichtung bewirkt, wobei n ≧ 1 ist.

Die Erfindung wird im folgenden an Hand eines Ausführungsbeispiels und mit Hilfe einiger Figuren näher erläutert. Im einzelnen zeigen
- Figur 1: eine schematische Darstellung einer Schälmaschine
- Figur 2: die Draufsicht auf eine Metallsuchsondenanordnung
- Figur 3: die Vorderansicht derselben
- Figur 4: ein Blockschaltbild der Metallsuchanordnung
- Figur 5: eine alternative Ausführung der Schälmaschine

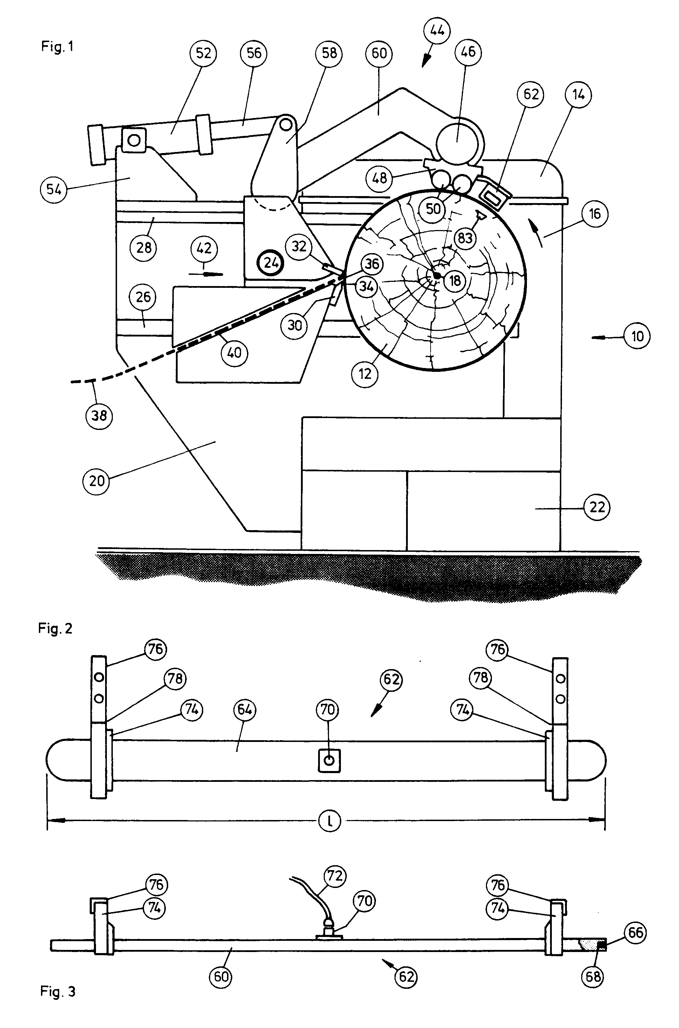

Figur 1 gibt in vereinfachter und schematisierter Darstellung eine Schälmaschine 10 wieder, in der die erfindungsgemäße Lösung Anwendung gefunden hat. Ein Holzstamm 12 ist an beiden Seiten durch zwei Spindeln (nicht sichtbar) zentrisch eingespannt, die von einer Rotiereinrichtung 14 (nur eine Seite ist sichtbar) angetrieben werden und den Holzstamm in Richtung von Pfeil 16 in Rotation um eine Achse 18 versetzen. Die tragenden Teile der Schälmaschine, insbesondere die Rotiereinrichtung 14 und ein Rahmen 20 ruhen auf einem Grundblock 22. Ein Messerwagen 24 ist beidseitig gleitend gelagert in je zwei Schienen 26, 28 (nur zwei sind sichtbar). An der Vorderseite des Messerwagens 24 ist ein Schälwerkzeug angebracht, welches aus zwei Klingen 30, 32 besteht, die sich über die ganze Länge des Holzstammes 12 erstrecken. Die beiden Klingen 30, 32, von denen die untere (30) eine scharfe Schneide 34 besitzt und mit dieser entlang einer Mantellinie in die Oberfläche des Holzstammes 12 eingreift, während die obere (32) einen Gegendruck auf die Oberfläche ausübt, bilden einen Spalt 36, durch den die abgeschälte Holzbahn 38 passiert. Die letztere verläßt die Schälmaschine 10, nach dem sie einen Kanal 40 durchlaufen hat. Der Messerwagen 24 besitzt einen Antrieb (nicht sichtbar), mit dessen Hilfe er sich in Richtung von Pfeil 42 vor- und rückwärts bewegen kann. Während des Schälbetriebes verleiht der Antrieb dem Messerwagen 24 einen Vorschub, der in einem festen Verhältnis zur Rotationsbewegung des Holzstammes 12 steht. Will man z. B. eine Holzbahn von 1,8 mm Stärke abschälen, so betätigt der Vorschub während einer Umdrehung des Holzstammes 12 ebenfalls 1,8 mm. Eine elektrische Kupplung zwischen Antrieb und Messerwagen 24 ermöglicht eine schnelle Unterbrechung des Vorschubes, wenn eine solche notwendig wird.

Um beim Schälen ein Ausweichen der Mitte des Holzstammes 12 nach oben zu vermeiden, ist eine Andruckvorrichtung 44 vorgesehen. Diese besitzt einen Andruckbalken 46, an den ein Wagen 48 angelenkt ist und der sich mittels am Wagen montierter Rollen 50 gegen die Oberfläche des Holzstammes 12 abstützt. Die Andruckkraft des Balkens 46 geht von einem in einem Lagerbock 54 gelagerten Druckzylinder 52 aus und wird von Kolben 56 des letzteren über einen Hebel 58 auf zwei Tragarme 60 (nur einer ist sichtbar) übertragen, an denen der Andruckbalken 46 angebracht ist.

Am Wagen 48 ist eine Suchsondenanordnung 62 befestigt, die in vergrößertem Maßstab in den Figuren 2 und 3 in Draufsicht beziehungsweise Vorderansicht dargestellt ist. Im vorliegenden Beispiel handelt es sich dabei um eine Spulenanordnung, die zu einem Wirbelstrommetallsuchgerät gehört. An dessen Stelle können ohne weiteres beliebige Metallsuchgeräte mit entsprechenden Suchsondenanordnungen treten. Ein Spulenkörper 64 aus hochwertigem elektrisch nichtleitendem Material und von langgestreckter Form liegt ähnlich wie das Schälwerkzeug 30, 32 einer Mantellinie des im wesentlichen zylinderförmigen Holzstammes 12 gegenüber und besitzt wie das genannte Schälwerkzeug eine Länge l, die derjenigen des Holzstammes in etwa entspricht. In Figur 3 ist in einem Teilschnitt eine Suchspule 66 zu erkennen. Diese ist in eine Nut 68 gewickelt, die in den Umfang des Spulenkörpers 64 eingefräst ist. Suchspule 66 ist über einen Anschlußflansch 70 an ein Kabel 72 angeschlossen, das die Suchspule mit einem Wirbelstromsuchgerät verbindet. Spulenkörper 64 wird gehaltert in rechteckigen Ausschnitten zweier Platten 74, die ebenfalls aus einem elektrisch nichtleitenden Werkstoff hergestellt sind. Die beiden Platten 74 sind mittels zweier Winkelträger 76 am Wagen 48 angebracht. Durch einen leichten Knick 78 der Winkelträger 76 erreicht man, daß über einen gewissen Durchmesserbereich des Holzstammes 12 die Spulenebene der Suchspule 64 in etwa tangential zur Oberfläche des Holzstammes ausgerichtet bleibt. Innerhalb des genannten Durchmesserbereichs kann auch der Abstand der Suchspule 64 zur Oberfläche des Holzstammes 12 als ausreichend konstant angesehen werden. Soll ein größerer Durchmesserbereich des Holzstammes 12 erfaßt werden, so kann die Verbindung zwischen Suchsondenanordnung 62 und Wagen 48 oder auch dem Andruckbalken 46 gelenkig ausgeführt werden. In diesem Falle muß sich die Suchsondenanordnung 62 durch Rollen oder Gleitkufen auf der Oberfläche des Holzstammes 12 abstützen.

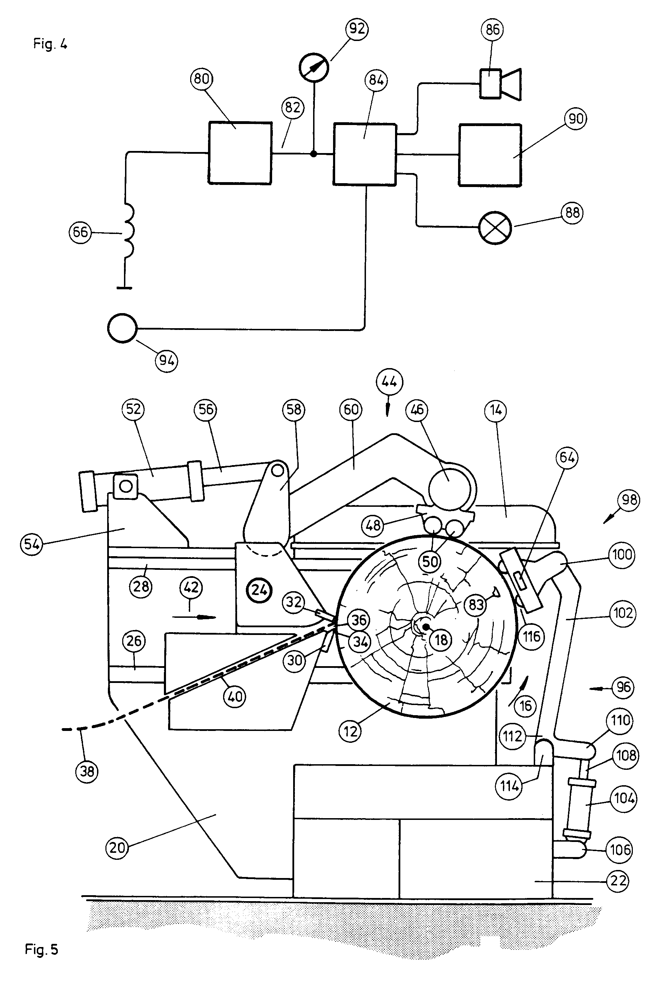

Figur 4 zeigt das Blockschaltbild einer in die Schälmaschine 10 integrierten Metallsuchanordnung. Darin ist die Suchspule 66 der Suchsondenanordnung 62 an ein Wirbelstrommetallsuchgerät 80 angeschlossen, das in bekannter Weise ein elektrisches Signal am Ausgang 82 entstehen läßt, wenn ein Metallteil 83 unter der Suchspule 62 durchläuft. In einer Auswerteanordnung 84 wird das Signal vom Ausgang 82 so weiterverarbeitet, daß von ihm eine akustische (86) und/oder eine optische (88) Meldeeinrichtung betätigt wird. Gleichzeitig spricht beim Erscheinen des Signals eine elektrische Antriebssteuerung 90 an, die den Vorschub des Messerwagens 24 stillsetzt. Darüber hinaus kann aber auch vom Signal der Antrieb des Messerwagens 24 veranlaßt werden, das Schälwerkzeug 30, 32 eine gewisse Strecke von der Oberfläche des Holzstammes 12 zurückzunehmen. Die Rotationsbewegung des Holzstammes wird dabei mit reduzierter Geschwindigkeit fortgesetzt. Der Bedienungsmann hat dann Gelegenheit, die Oberfläche des Holzstammes 12 zu beobachten und auf das Auftreten der Verfärbung zu warten, die schon äußerlich ein unter der Oberfläche liegendes Metallteil 83 ankündigt. Eine genaue Feststellung des Winkelortes des gemeldeten Metallteiles 83 ist jedoch auch elektrisch möglich. Man braucht dazu nur das Maximum des Signales am Ausgang 82 durch ein Anzeigeinstrument 92 zu überwachen. Ein Winkelcodierer 94 steht in Verbindung mit der Rotationsbewegung der Rotiereinrichtung 14, und meldet durch entsprechende Signale an die Auswerteanordnung 84 die jeweilige Winkellage der Rotation des Baumstammes 12. Dadurch wird es in einfacher Weise möglich, zufällige Störsignale, die nicht im Zusammenhang mit der Rotationsbewegung stehen, unschädlich zu machen. Das geschieht in der Weise, daß erst beim zweiten oder einem weiteren Auftreten eines Signales in der gleichen Winkellage von der Auswerteanordnung 84 ein Auswertesignal weitergegeben wird. Die praktisch immer gegebene Voraussetzung dazu ist, daß die Suchsondenanordnung 62 das zu ermittelnde Metallteil 83 nicht erst fühlt, wenn sich dieses innerhalb der gerade abzuschälenden obersten Schicht befindet. In Wirklichkeit meldet die Suchsondenanordnung schon im Abstand von 1 - 2 cm das Metallteil 83. Bei einer abzuschälenden Schicht von 1 - 2 mm Stärke bleibt also genügend Zeit zum Abschalten des Vorschubantriebes, wenn dies erst beim zweiten oder dritten Durchlauf des Metallteiles 83 veranlaßt wird. Die Sicherheit, daß ein Abschalten nicht durch ein Störsignal verursacht wird, kann damit wesentlich gesteigert werden.

Figur 5 zeigt eine alternative Ausführung der erfindungsgemäßen Schälmaschine, bei der die Suchsondenanordnung 62 nicht an der Andruckvorrichtung 44, sondern an einer besonderen Tragvorrichtung 96 befestigt ist. Im übrigen ist die hier dargestellte Schälmaschine 98 gleich aufgebaut, wie die Schälmaschine 10 gemäß Figur 1. Es sind daher für gleiche Teile die gleichen Bezugszahlen angegeben, so daß sich insoweit eine Wiederholung der Beschreibung erübrigt. Die Tragvorrichtung besteht aus einem Sondenträger 100, einem Sondenhebel 102 und einem Druckzylinder 104. Der Letztere ist rückseitig über Böckchen 106 am Grundblock 22 gelagert. Er dient dazu, den Sondenwagen 100 an die Oberfläche des Holzstammes 12 anzudrücken beziehungsweise ihn nach Beendigung des Schälvorganges in eine rückwärtige Stellung abzuheben. Zu diesem Zwecke ist der Kolben 108 des Druckzylinders 104 mit dem abgewinkelten Ende 110 des Sondenhebels 102 verbunden, dessen Knie 112 in Böckchen 114 gelagert ist. Am vorderen Ende des Sondenhebels 102 ist der Sondenträger 100 gelenkig gelagert. Er stützt sich mittels Rollen 116 auf die Oberfläche des Holzstammes 12 ab. In seinem Inneren birgt der Sondenträger 100 den Spulenkörper 64 einer Suchsondenanordnung, die in allen wesentlichen Teilen der Suchsondenanordnung 62 gemäß Figur 3 entspricht. Die alternative Ausführung nach Figur 5 ist insbesondere dann sinnvoll, wenn eine Bewegung der Suchsondenanordnung unabhängig von der Andruckvorrichtung gewünscht wird.

## Patentansprüche

1. Verfahren zum Schälen eines Holzstammes mit einem relativ zur Oberfläche des Holzstammes bewegten Schälwerkzeug, dadurch gekennzeichnet,
daß während des Schälens alle Bereiche der Oberfläche des Holzstammes, die mit dem Schälwerkzeug in Berührung kommen sollen, fortlaufend durch eine Suchsonde auf Metallteile abgesucht werden, bevor die Berührung des Schälwerkzeuges mit den entsprechenden Bereichen stattfindet.

2. Schälmaschine zum Durchführen des Verfahrens nach Anspruch 1, mit einer Rotiereinrichtung (14), die den Holzstamm (12) an seinen beiden Enden an im wesentlichen zentrisch gelegenen Punkten einspannt und ihm eine Rotationsbewegung um eine von den genannten Punkten definierte Achse (18) übermittelt, mit einem Schälwerkzeug (30, 32), das entlang einer ersten Mantellinie des Holzstammes (12) angeordnet ist, mit einer Vorschubeinrichtung (24) für das Schälwerkzeug (30, 32), die das letztere in im wesentlichen radialer Richtung des Holzstammes (12) nachführt, so daß das Schälwerkzeug (30, 32) während der Rotationsbewegung des Holzstammes (12) eine spiralige Bahn relativ zum letzteren zurücklegt und aus ihm ein endloses Band (38) abschält, dadurch gekennzeichnet,
daß entlang einer zweiten Mantellinie des Holzstammes (12) eine zu einem Metallsuchgerät (80) gehörige Suchsonde (66) angeordnet ist, in der ein elektrisches Signal erzeugt wird, wenn ein an oder unter der Oberfläche des Holzstammes (12) befindliches Metallteil (83) in den Wirkbereich der Suchsonde (66) gelangt.

3. Schälmaschine nach Anspruch 2, dadurch gekennzeichnet,
daß Mittel (50, 116) vorgesehen sind, die die Suchsonde (66) in einem im wesentlichen konstantem Abstand zur Oberfläche des Holzstammes (12) halten.

4. Schälmaschine nach Anspruch 3, dadurch gekennzeichnet,
daß die Suchsonde (66) an einer Andruckvorrichtung (44) befestigt ist, die in bekannter Weise vor dem Schälwerkzeug (30, 32) angebracht ist und sich dort mittels Rollen (50) auf den Holzstamm (12) abstützt, um auf diesen einen Druck auszuüben.

5. Schälmaschine nach Anspruch 3, dadurch gekennzeichnet,
daß die Suchsonde (66) in einen Sondenträger (100) eingebaut ist, der an einem Sondenhebel (102) gelenkig gelagert ist und sich auf die Oberfläche des Holzstammes (12) mittels Gleitkufen oder Rollen (116) abstützt.

6. Schälmaschine nach einem der vorhergehenden Ansprüche, dadurch gekennzeichnet,
daß die Suchsonde (66) von langgestreckter Form ist und ihre Längsausdehnung in etwa derjenigen des Schälwerkzeuges (30, 32) entspricht.

7. Schälmaschine nach einem der vorhergehenden Ansprüche, dadurch gekennzeichnet,
daß die Suchsonde (66) aus einer Anzahl von in Längsrichtung hintereinander angeordneten Einzelsonden besteht, deren Gesamtlänge der Längsausdehnung des Schälwerkzeuges (30, 32) entspricht.

8. Schälmaschine nach einem der vorhergehenden Ansprüche, dadurch gekennzeichnet,
daß das elektrische Signal aus der Suchsonde (66) veranlaßt, daß das Schälwerkzeug aus dem Eingriff mit der Oberfläche des Holzstammes (12) genommen wird, z. B. durch Stillsetzen des Vorschubes (24).

9. Schälmaschine nach einem der vorhergehenden Ansprüche, dadurch gekennzeichnet,
daß das elektrische Signal aus der Suchsonde (66) eine optische (88) und/oder akustische (86) Meldeeinrichtung betätigt.

10. Schälmaschine nach Anspruch 7 oder 8, dadurch gekennzeichnet,
daß zusätzlich ein Winkelcodierer zum Aufnehmen des Winkels der Rotationsbewegung des Holzstammes (12) vorgesehen ist, ferner ein elektronischer Schaltkreis, der erst bei der n-ten Wiederholung eines elektronischen Signales aus der Suchsonde (66), das aus ein und demselben vom Winkelcodierer gemeldeten Winkelsektor stammt, eine Auswerteeinrichtung betätigt, wobei n ≧ 1 ist.

## Claims

1. Method for barking a tree trunk with a barking tool moved relative to the tree trunk surface, characterized in that during barking all areas of the tree trunk surface are to come into contact with the barking tool, are to be continuously sensed by a detection probe for metal parts before contact between the barking tool and the corresponding areas takes place.

2. Barking machine for performing the method according to claim 1, with a rotating device (14), which fixes the two ends of the tree trunk (12) at substantially centrally located points and imparts to it a rotary movement about an axis (18) defined by the said points, with a barking tool (30, 32) positioned along a first generatrix of the tree trunk (12), with an advance device (24) for the barking tool (30, 32), which follows the latter in a substantially radial direction of the tree trunk (12), so that during the rotary movement of the latter the barking tool (30, 32) performs a spiral path relative to the latter and barks an endless strip (38) therefrom, characterized in that along a second generatrix of the tree trunk (12) is provided a detection probe (66) belonging to a metal detector (80) and in which an electric signal is generated, if a metal part (83) located on or below the surface of the tree trunk (12) passes into the field of action of the detection probe (66).

3. Barking machine according to claim 2, characterized in that means (50, 116) are provided which keep the detection probe (66) at a substantially constant distance from the surface of the tree trunk (12).

4. Barking machine according to claim 3, characterized in that the detection probe (66) is fixed to a pressure device (44), which in known manner is fitted upstream of the barking tool (30, 32) and is supported there by means of rolls (50) on the tree trunk (12), in order to exert a pressure on the latter.

5. Barking machine according to claim 3, characterized in that the detection probe (66) is fitted in a probe carrier (100), which is mounted in articulated manner on a probe lever (102) and is supported on the surface of the tree trunk (12) by means of sliding members or rolls (116).

6. Barking machine according to one of the preceding claims, characterized in that the detection probe (66) has an elongated shape and its longitudinal extension roughly corresponds to that of the barking tool (30, 32).

7. Barking machine according to one of the preceding claims, characterized in that the detection probe (66) comprises a plurality of longitudinally succeeding individual probes, whose total length corresponds to the longitudinal extension of the barking tool (30, 32).

8. Barking machine according to one of the preceding claims, characterized in that an electric signal from the detection probe (66) gives rise to the barking tool being disengaged from the surface of the tree trunk (12), e.g. on stopping the advance (24).

9. Barking machine according to one of the preceding claims, characterized in that the electric signal from the detection probe (66) operates an optical (88) and/or acoustic (86) indicator.

10. Barking machine according to claim 7 or 8, characterized in that there is additionally an angle coder for recording the angle of the rotary movement of the tree trunk (12), as well as an electronic circuit, which only in the case of the nth repeat of an electronic signal from the detection probe (66) and which comes from the same angular sector indicated by the angle coder, operates an evaluating device, n ≧ 1.

## Revendications

1. Procédé pour dérouler un tronc d'arbre au moyen d'un outil de déroulage se déplaçant par rapport à la surface du tronc d'arbre, caractérisé en ce que pendant le déroulage, toutes les zones de la surface du tronc d'arbre qui doivent entrer en contact avec l'outil de déroulage sont balayées en continu par une sonde chercheuse pour rechercher des morceaux de métal avant que l'outil de déroulage n'entre en contact avec les zones concernées.

2. Dérouleuse pour mettre en oeuvre le procédé selon la revendication 1, comportant un dispositif rotatif (14) qui serre le tronc d'arbre (12) à ses deux extrémités en des points situés essentiellement au centre et lui transmet un mouvement de rotation autour d'un axe (18) défini par les points cités précédemment, comportant également un outil de déroulage (30, 32) qui est disposé le long de la génératrice du tronc d'arbre (12), un dispositif d'avance (24) pour l'outil de déroulage (30, 32) qui fait avancer ce dernier pour l'essentiel dans la direction radiale du tronc d'arbre (12), si bien que, pendant le mouvement de rotation du tronc d'arbre (12), l'outil de déroulage (30, 32) parcourt un trajet en spirale par rapport à ce dernier et déroule de celui-ci une bande (38) sans fin, caractérisée en ce que le long d'une deuxième génératrice du tronc d'arbre (12) est disposée une sonde chercheuse (66) appartenant à un chercheur de métal (80) dans laquelle est produit un signal électrique lorsqu'un morceau de métal (83) se trouvant sur ou sous la surface du tronc d'arbre (12) arrive dans le rayon d'action de la sonde chercheuse (66).

3. Dérouleuse selon la revendication 2, caractérisée en ce que sont prévus des moyens (50, 116) qui maintiennent la sonde chercheuse (66) à une distance essentiellement constante de la surface du tronc d'arbre (12).

4. Dérouleuse selon la revendication 3, caractérisée en ce que la sonde chercheuse (66) est fixée à un dispositif presseur (44) qui est disposé d'une manière connue devant l'outil de déroulage (30, 32) et prend appui à cet endroit sur le tronc d'arbre (12) au moyen de galets (50) pour exercer une pression sur ce dernier.

5. Dérouleuse selon la revendication 3, caractérisée en ce que la sonde chercheuse (66) est logée dans un support de sonde (100) qui est monté de manière articulée sur un levier de sonde (102) et qui prend appui sur la surface du tronc d'arbre (12) au moyen de patins de glissement ou de galets (116).

6. Dérouleuse selon l'une des revendications précédentes, caractérisée en ce que la sonde chercheuse (66) est de forme allongée et en ce que son étendue longitudinale correspond approximativement à celle de l'outil de déroulage (30, 32).

7. Dérouleuse selon l'une des revendications précédentes, caractérisée en ce que la sonde chercheuse (66) se compose d'un certain nombre de sondes distinctes disposées les unes derrière les autres dans la direction longitudinale, dont la longueur totale correspond à l'étendue longitudinale de l'outil de déroulage (30, 32).

8. Dérouleuse selon l'une des revendications précédentes, caractérisée en ce que le signal électrique émis par la sonde chercheuse (66) fait en sorte que l'outil de déroulage quitte la surface du tronc d'arbre (12), par exemple en coupant l'avance (24).

9. Dérouleuse selon l'une des revendications précédentes, caractérisée en ce que le signal électrique érnis par la sonde chercheuse (66) actionne un avertisseur optique (88) et/ou sonore (86).

10. Dérouleuse selon la revendication 7 ou 8, caractérisée en ce que sont également prévus un codeur d'angle pour enregistrer l'angle du mouvement de rotation du tronc d'arbre (12) ainsi qu'un circuit électronique qui n'actionne un analyseur qu'à la nième répétition d'un signal électronique de la sonde chercheuse (66) provenant d'un seul et même secteur d'angle annoncé par le codeur d'angle, sachant que n ≧ 1.
